# FASCICULE DE BREVET EUROPEEN

(11) **EP 3 491 327 B1**
(45) Date de publication et mention de la délivrance du brevet: **29.07.2020**
(21) Numéro de dépôt: 17758593.2
(22) Date de dépôt: 31.07.2017
(51) Int. Cl.: F41A 9/06, F41A 9/87

(54) **DISPOSITIF DE BLOCAGE D'UN OBUS ET CIVIÈRE COMPORTANT UN TEL DISPOSITIF DE BLOCAGE**
VORRICHTUNG ZUR VERRIEGELN EINER GRANATE UND TRAGE MIT SOLCH EINER VERRIEGELUNGSVORRICHTUNG
DEVICE FOR LOCKING A SHELL AND STRETCHER COMPRISING SUCH A LOCKING DEVICE

(30) Priorité: 01.08.2016 FR 1601180
(43) Date de publication de la demande: 05.06.2019
(73) Titulaire: NEXTER Systems, 42328 Roanne Cedex (FR)
(72) Inventeur: HASLER, Jean-Luc, 18023 Bourges (FR)
(74) Mandataire: Cabinet Chaillot
(86) Numéro de dépôt international: PCT/FR2017/052154
(87) Numéro de publication internationale: WO 2018/024978

(56) Documents cités:
- EP-A1- 0 406 716
- EP-A2- 1 164 347
- US-A- 3 804 453

## Description

Le domaine technique de l'invention est celui des dispositifs de blocage et préhension d'obus.

Les obus des pièces d'artillerie sont particulièrement lourds, pesant entre 25 et 47 kilos en moyenne, ce qui rend leur manipulation délicate. Afin de les saisir facilement, il est connu du brevet US3804453 une pince comportant une paire de mâchoires se refermant sur un obus à saisir lorsque l'obus appuie sur la base de chaque mâchoire. Chaque mâchoire comporte une crémaillère comportant des dents qui interfèrent avec un ergot qui bloque chaque mâchoire en position fermée. Un ressort tend à maintenir l'ergot dans une position d'interférence avec les dents de la crémaillère. Pour relâcher l'obus un opérateur doit faire pivoter un levier qui agit contre l'effort du ressort et dégage les ergots de la trajectoire pivotante de chaque crémaillère. Ainsi, par gravité l'obus ouvre les mâchoires et est libéré.

Un tel dispositif implique l'action d'un opérateur pour actionner le levier de libération.

L'invention propose de s'affranchir de l'action d'un opérateur.

Il est par ailleurs souvent nécessaire de maintenir un obus bloqué sur une civière solidaire d'un dispositif de chargement automatique de l'artillerie. Ce maintien est assuré pendant les phases de recul ou de tir afin d'éviter l'éjection de l'obus hors de la civière. L'obus est retiré de la civière à l'aide d'une pince d'un mécanisme de transfert.

Si le dispositif de l'art antérieur est utilisé de façon symétrique, c'est à dire avec l'ouverture des mâchoires vers le haut de manière à bloquer un obus sur une civière, il faudra pour libérer l'obus de la civière que le levier soit maintenu actionné pendant toute la phase d'extraction de l'obus avec la pince.

L'invention propose un dispositif de blocage pour obus au fonctionnement simple qui maintient des mâchoires en position ouverte, sans action d'un opérateur, pendant toute la phase d'extraction de l'obus hors de la civière. L'invention permet ainsi de temporiser la remise des mâchoires dans une position apte à leur fermeture, jusqu'à ce que l'obus soit totalement extrait.

Ainsi l'invention porte sur un dispositif de blocage d'un obus, en particulier dans une civière, dispositif comportant au moins une mâchoire destinée à venir serrer l'obus et pivotant entre une position ouverte et une position fermée autour d'un axe de pivotement parallèle à un axe longitudinal de l'obus, l'axe de pivotement de la mâchoire étant situé entre une extrémité supérieure et une extrémité inférieure de la mâchoire, l'extrémité inférieure de la mâchoire étant destinée à recevoir l'obus pour permettre sa fermeture, dispositif de blocage comportant une came et un levier pivotant, l'extrémité inférieure de la mâchoire comportant un cran destiné à interférer avec un ergot de la came pour maintenir la mâchoire en position fermée, la came étant solidaire du levier pivotant, le pivotement du levier permettant de dégager ainsi l'ergot de la trajectoire tournante du cran de la mâchoire, ce qui autorise l'ouverture de la mâchoire, dispositif caractérisé en ce que le levier est destiné à être actionné en pivotement par la poussée d'un organe externe tel un moyen de transport d'obus, le dispositif de blocage comportant un premier ressort et un second ressort agissant chacun sur le levier de façon antagoniste, le second ressort étant plus raide que le premier, le premier ressort ayant pour effet de rappeler le levier en position haute de manière à amener l'ergot de la came en contact avec la mâchoire, le second ressort étant destiné à être actionné par la poussée de l'organe et ayant pour effet de contrer l'action du premier ressort, permettant ainsi de retarder la remontée du levier et de l'ergot de verrouillage lors du retrait de l'organe.

Avantageusement, le dispositif de blocage comporte une tige poussoir apte à transmettre le mouvement de poussée de l'organe externe sur le second ressort.

Avantageusement, la tige poussoir comporte un épaulement, le second ressort étant un ressort de compression interposé entre l'épaulement et le levier.

Suivant un mode de réalisation, le premier ressort est un ressort de traction fixé entre le levier et un bâti solidaire de la civière.

Suivant un autre mode de réalisation, le premier ressort est un ressort de compression fixé entre le levier et une plaque de fond solidaire de la civière.

Avantageusement, le dispositif de blocage comprend une cale formant une butée limitant le pivotement du levier.

L'invention porte également sur une civière de réception d'un obus comportant un dispositif de blocage selon une des caractéristiques précédentes.

Avantageusement, la civière de réception pourra comporter au moins une paire de mâchoires disposées de part et d'autre de la civière et en regard l'une de l'autre.

Selon un autre mode de réalisation, la civière de réception comportera au moins une mâchoire disposée en regard d'un berceau fixe.

L'invention sera mieux comprise à la lecture de la description suivante, description faite à la lumière des dessins en annexe, dessins dans lesquels :
La figure la représente une vue partielle de trois quarts d'un dispositif selon un premier mode de réalisation de l'invention, en position ouverte en attente d'un obus ou après l'extraction d'un obus.
La figure 1b représente une vue schématique transversale d'un dispositif selon un second mode de réalisation de l'invention, en position ouverte en attente d'un obus ou après l'extraction d'un obus.
La figure 2a représente une vue de trois quarts du dispositif selon le premier mode de réalisation de l'invention en position fermée et retenant un obus.
La figure 2b représente une vue schématique transversale du dispositif selon le second mode de réalisation de l'invention en position fermée et retenant un obus.
La figure 3a représente une vue de trois quarts du dispositif selon le premier mode de réalisation de l'invention et au cours d'une première étape de libération de l'obus.
La figure 3b représente une vue schématique transversale du dispositif selon le second mode de réalisation de l'invention et au cours d'une première étape de libération de l'obus.
La figure 4a représente une vue de trois quarts du dispositif selon le premier mode de réalisation de l'invention et au cours d'une seconde étape de libération de l'obus.
La figure 4b représente une vue schématique transversale du dispositif selon le second mode de réalisation de l'invention et au cours d'une seconde étape de libération de l'obus.
La figure 5a représente une vue de trois quarts du dispositif selon le premier mode de réalisation de l'invention et au cours d'une troisième étape de libération de l'obus.
La figure 5b représente une vue schématique transversale du dispositif selon le second mode de réalisation de l'invention et au cours d'une troisième étape de libération de l'obus.

La description qui va suivre va mettre en parallèle deux modes de réalisation de l'invention de façon à faciliter la comparaison entre les deux modes.

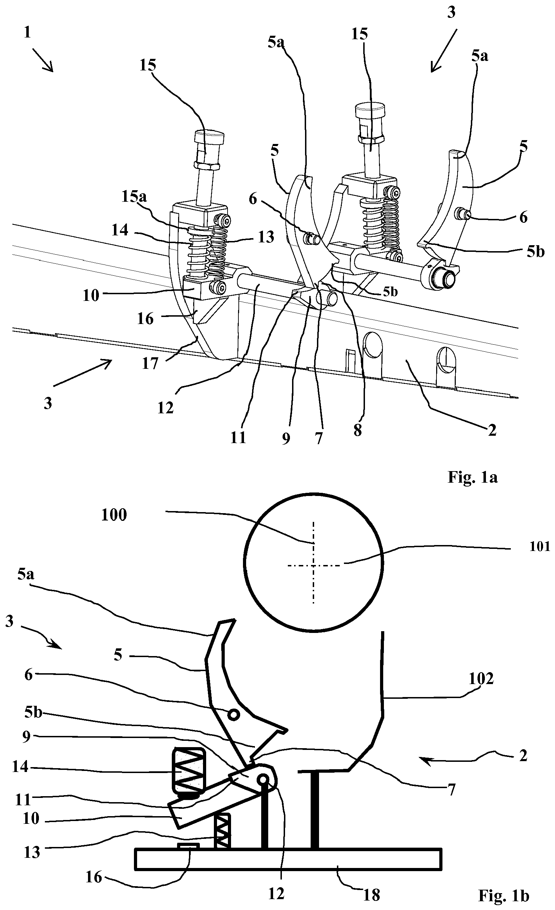

Selon la figure 1a, un dispositif de maintien d'obus 1 comporte une civière 2 destinée à être solidaire d'une pièce d'artillerie (pièce d'artillerie non visible) et un dispositif de blocage selon un premier mode de réalisation de l'invention.

Le dispositif de maintien 1 comporte ici au moins deux dispositifs de blocage 3 disposés symétriquement de part et d'autre de la civière 2.

Chaque dispositif de blocage 3 comporte une mâchoire 5 située en regard de la mâchoire 5 de l'autre dispositif de blocage 3.

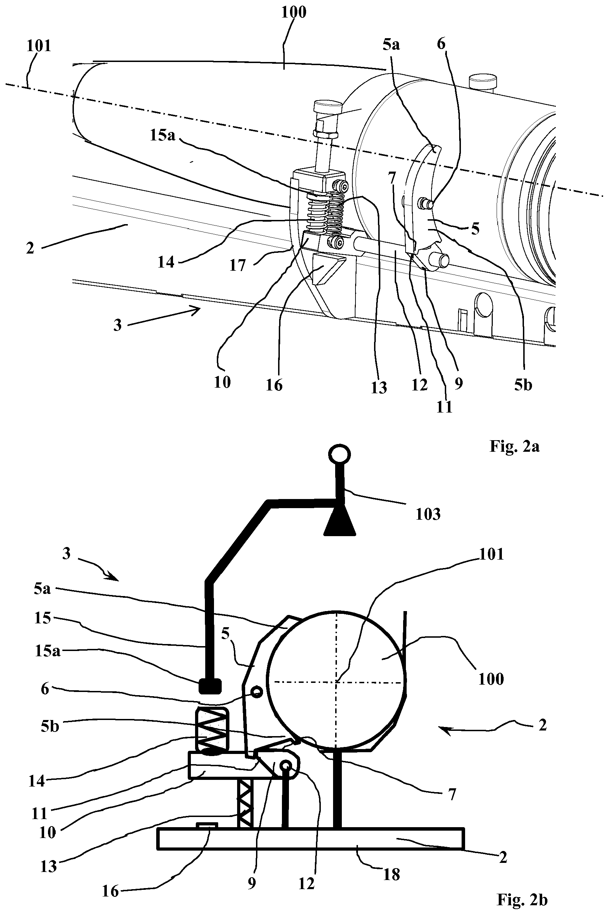

Pour chaque dispositif de blocage 3, la mâchoire 5 est apte à pivoter entre une position ouverte et une position fermée autour d'un axe de pivotement 6 parallèle à l'axe longitudinal 101 d'un obus 100 visible aux figures 2 à 5.

L'axe de pivotement 6 de chaque mâchoire 5 est situé entre une extrémité supérieure 5a et une extrémité inférieure 5b de la mâchoire 5. Chaque axe de pivotement 6 est logé dans une douille solidaire de la civière et non représentée sur ces vues schématiques qui ne montrent que les principaux organes et leur cinématique.

La figure 1b représente un second mode de réalisation de l'invention qui diffère du premier mode en ce qu'il ne comporte qu'un seul dispositif de blocage 3. Le dispositif de blocage 3 est solidaire de la civière 2 et il est positionné en regard d'un berceau 102 fixe, apte à recevoir un obus 100 et à le soutenir par sa partie inférieure et un côté.

Selon les figures 2a et 2b qui mettent en parallèle les deux modes de réalisation, l'extrémité inférieure 5b de la mâchoire 5 permet dans tous les cas la fermeture de la mâchoire 5 par appui de l'obus 100 sur cette extrémité inférieure 5b qui entraine le pivotement de la mâchoire 5.

Toujours selon les figures 2a et 2b, lorsqu'un obus 100 est déposé sur la civière 2, la mâchoire 5 du dispositif de blocage 3 est refermée sur l'obus 100 et l'enserre. On note que l'extrémité inférieure 5b de la mâchoire 5 comporte un cran 7 destiné à interférer avec un ergot 11 d'une came 9 pour maintenir la mâchoire 5 en position fermée (figures 2a et 2b). La came 9 est solidaire en rotation d'un levier 10 par une tige 12 qui est montée pivotante sur des douilles non représentées et solidaires de la civière 2. Une des douilles est en particulier portée par un bâti 17 visible aux figures 1a, 2a, 3a, 4a et 5a.

Selon le premier mode de réalisation, chaque dispositif de blocage 3 comporte un premier ressort 13, qui est un ressort de traction, et dont une première extrémité est fixée au levier 10 et une seconde extrémité est fixée au bâti 17. Ce premier ressort 13 tend à lever le levier 10 vers une position haute qui a pour effet de maintenir l'ergot 11 au contact de la partie inférieure 5b de la mâchoire 5.

Selon le second mode de réalisation des figures 1b, 2b, 3b, 4b et 5b c'est un ressort de compression 13 qui est situé entre une plaque de fond 18 solidaire de la civière 2 et le levier 10. Ce ressort de compression, disposé en dessous du levier 10, a le même effet de relèvement du levier 10 que le ressort de traction du premier mode.

Suivant le premier mode de réalisation, un second ressort 14, qui est un ressort de compression et qui est plus raide que le premier ressort 13, est en appui entre le levier 10 et un épaulement 15a d'une tige poussoir 15. Le premier ressort 13 et le second ressort 14 sont disposés de façon à avoir une action antagoniste sur le levier 10, c'est à dire que l'effort exercé par un ressort sur le levier 10 crée un couple de sens inverse du couple créé par l'autre ressort.

La tige poussoir 15 est destinée à interférer avec une surface d'appui d'un organe externe qui est ici un moyen de transport d'obus non représenté, comprenant en particulier une pince à obus.

Selon le second mode de réalisation et tel que représenté à la figure 2b, la tige poussoir 15 et l'épaulement 15a font partie de l'organe externe formé par le moyen de transport 103.

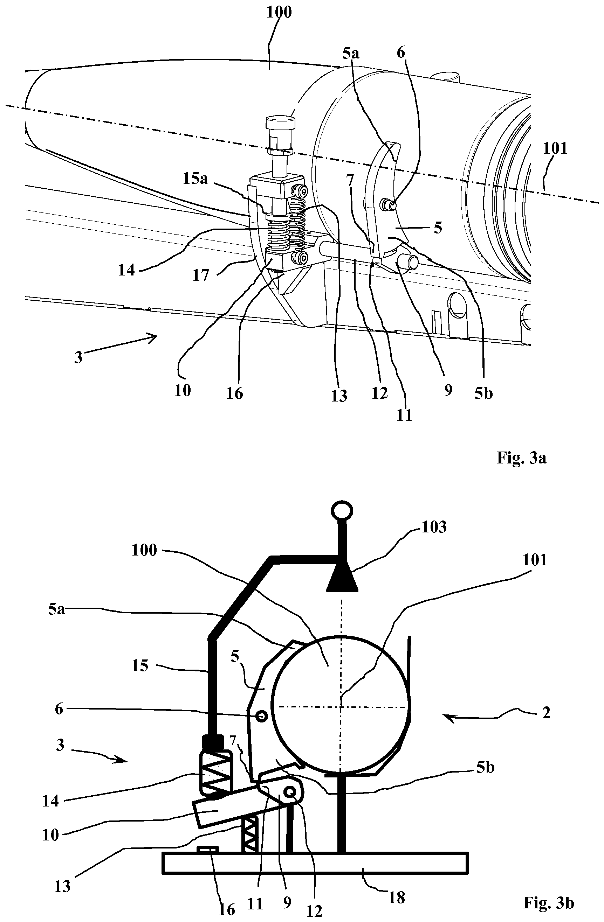

Selon les figures 3a et 3b, l'appui de la tige poussoir 15 sur le second ressort 14 pousse ce ressort 14 qui pousse alors l'extrémité libre du levier 10 qui pivote contre l'action du premier ressort 13 et dégage l'ergot 11 de la trajectoire tournante du cran 7 de la mâchoire 5.

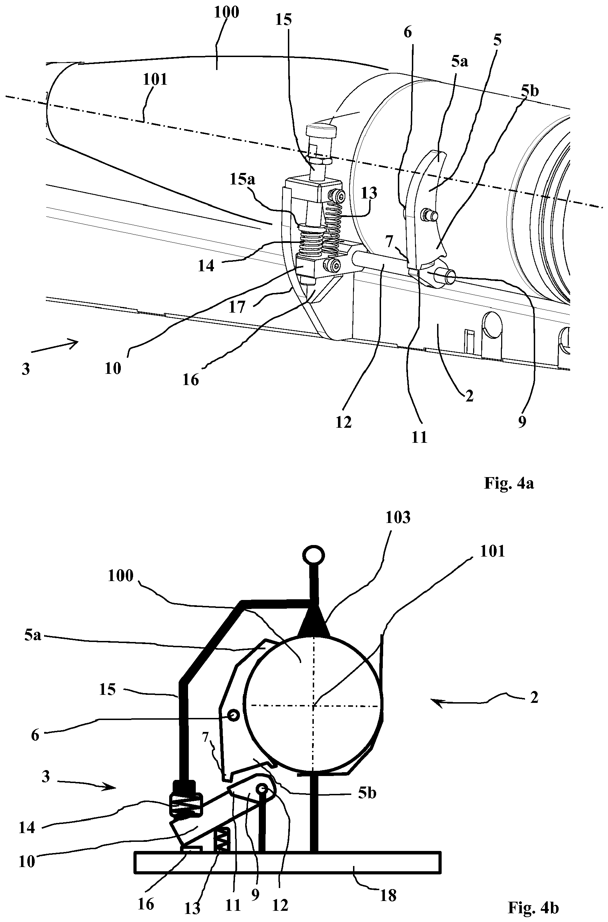

Selon la figure 4a, à partir de cette position angulaire du levier 10, dans laquelle l'ergot 11 est dégagé de la trajectoire tournante du cran, une cale 16 bloque le pivotement du levier 10.

En poursuivant la poussée de l'organe externe sur la tige poussoir 15 (figure 4a) ou sur le second ressort (figure 4b), le second ressort 14 est alors progressivement comprimé jusqu'à une valeur maximale qui est obtenue pour la course verticale maximale de l'organe externe formé par le moyen de transport d'obus qui peut alors se saisir de l'obus 100. Le second ressort 14 ne s'est donc trouvé comprimé qu'à partir d'une position angulaire du levier 10 dans laquelle l'ergot 11 est dégagé de la trajectoire tournante du cran 7.

Pour ce qui concerne le deuxième mode de réalisation, les figures 3b et 4b permettent de mieux voir le phénomène.

Lors de la remontée de l'obus 100, le dispositif de blocage 3 va subir simultanément la décompression progressive du second ressort 14 qui, étant plus raide que le premier ressort 13 va fournir un effort vers le bas qui va contrer pendant un certain temps l'effort exercé vers le haut par le premier ressort 13, retardant ainsi la remontée du levier 10 et donc le retour de l'ergot 11 en position haute.

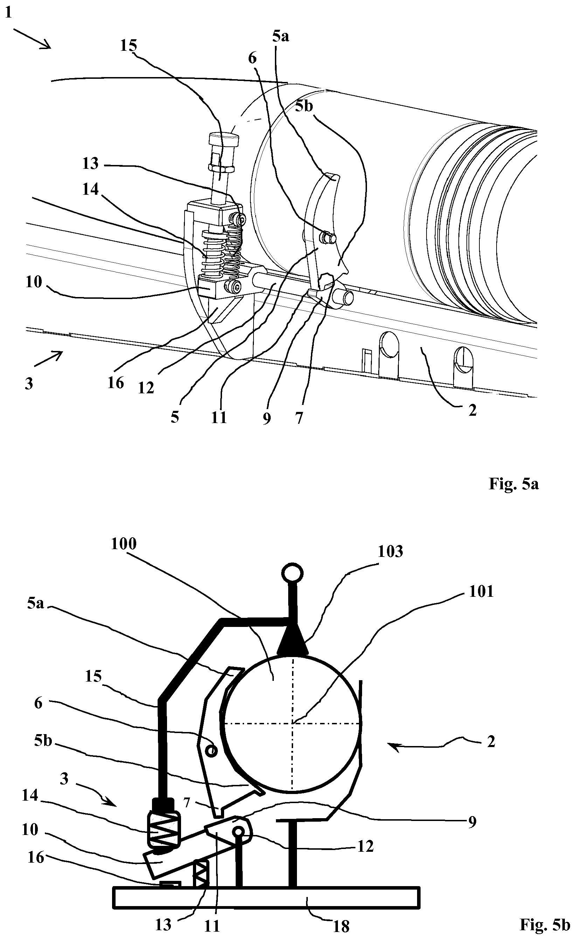

Ce faisant, la remontée de l'obus 100 saisi provoque l'ouverture des mâchoires 5 qui vont pivoter et placer le cran 7 au-delà de la zone d'interférence possible avec l'ergot 11 comme visible aux figures 5a et 5b. La décompression progressive du second ressort 14 va se faire jusqu'à une valeur d'effort inférieure à la tension exercée dans le premier ressort 13 qui va alors relever le levier 10 et donc la came 9 et son ergot 11 contre l'extrémité inférieure 5b de la mâchoire 5 ouverte telle que visible aux figures 1a et 1b.

On note à la figure la que la came 9 comporte une butée 8 destinée à limiter la course d'ouverture de la mâchoire 5 par interférence avec le cran 7.

Dans cette position les mâchoires sont écartées prêtes à recevoir un nouvel obus dont la mise en place entre les mâchoires 5 provoquera leur fermeture, comme évoqué plus haut. Le cran 7 viendra alors pivoter et se retrouvera à nouveau en interférence avec l'ergot 11 de la came 9.

L'invention permet ainsi, sans action d'un opérateur, d'ouvrir et de refermer les mâchoires 5 d'un dispositif de maintien d'obus 100 et l'invention permet de temporiser la remise des mâchoires dans une position ouverte apte à se refermer sur un obus en attendant que l'obus soit totalement extrait.

Le premier mode de réalisation de l'invention a été décrit mettant en œuvre au moins une paire de mâchoires 5. Il est possible bien entendu de prévoir plusieurs paires de mâchoires, par exemple deux paires disposées à distance l'une de l'autre, pour sécuriser le verrouillage de l'obus.

D'une façon analogue, le deuxième mode de réalisation qui a été décrit en ne montrant qu'une seule mâchoire en regard d'un berceau fixe, pourra comporter au moins une autre mâchoire, elle aussi en regard du berceau fixe et disposée à distance de la première mâchoire, toujours pour sécuriser le verrouillage de l'obus.

L'invention a été décrite ici dans une application du dispositif de blocage au verrouillage d'un obus sur une civière. Elle pourrait également être mise en œuvre pour réaliser une pince de saisie d'un obus. Il suffit pour cela de considérer les moyens disposés de façon symétrique par rapport à un plan horizontal. La pince coopèrera pour commander son ouverture avec un organe externe qui ne sera plus alors porté par un moyen de transport, mais qui sera disposé de façon fixe et solidaire de l'arme au niveau d'une zone où la pince doit prélever ou déposer l'obus.

## Revendications

1. Dispositif de blocage (3) d'un obus (100), en particulier dans une civière (2), dispositif comportant au moins une mâchoire (5) destinée à venir serrer l'obus (100) et pivotant entre une position ouverte et une position fermée autour d'un axe de pivotement (6) parallèle à un axe longitudinal (101) de l'obus (100), l'axe de pivotement (6) de la mâchoire (5) étant situé entre une extrémité supérieure (5a) et une extrémité inférieure (5b) de la mâchoire (5), l'extrémité inférieure (5b) de la mâchoire (5) étant destinée à recevoir l'obus (100) pour permettre sa fermeture, dispositif de blocage (3) comportant une came (9) et un levier (10) pivotant, l'extrémité inférieure (5b) de la mâchoire (5) comportant un cran (7) destiné à interférer avec un ergot (11) de la came (9) pour maintenir la mâchoire (5) en position fermée, la came (9) étant solidaire du levier (10) pivotant, le pivotement du levier (10) permettant de dégager ainsi l'ergot (11) de la trajectoire tournante du cran (7) de la mâchoire (5), ce qui autorise l'ouverture de la mâchoire (5), dispositif **caractérisé en ce que** le levier (10) est destiné à être actionné en pivotement par la poussée d'un organe externe tel un moyen de transport d'obus (103), le dispositif de blocage (3) comportant un premier ressort (13) et un second ressort (14) agissant chacun sur le levier (10) de façon antagoniste, le second ressort (14) étant plus raide que le premier (13), le premier ressort (13) ayant pour effet de rappeler le levier (10) en position haute de manière à amener l'ergot (11) de la came (9) en contact avec la mâchoire (5), le second ressort (14) étant destiné à être actionné par la poussée de l'organe (103) et ayant pour effet de contrer l'action du premier ressort (13), permettant ainsi de retarder la remontée du levier (10) et de l'ergot (11) de verrouillage lors du retrait de l'organe (103).

2. Dispositif de blocage (3) selon la revendication 1, **caractérisé en ce qu'**il comporte une tige poussoir (15) apte à transmettre le mouvement de poussée de l'organe externe (103) sur le second ressort (14).

3. Dispositif de blocage (3) selon la revendication 2, **caractérisé en ce que** la tige poussoir (15) comporte un épaulement (15a), le second ressort (14) étant un ressort de compression interposé entre l'épaulement (15a) et le levier (10) .

4. Dispositif de blocage (3) selon une des revendications 1 à 3, **caractérisé en ce que** le premier ressort (13) est un ressort de traction fixé entre le levier (10) et un bâti solidaire de la civière (2).

5. Dispositif de blocage (3) selon une des revendications 1 à 3, **caractérisé en ce que** le premier ressort (13) est un ressort de compression fixé entre le levier (10) et une plaque de fond (18) solidaire de la civière (2).

6. Dispositif de blocage (3) selon une des revendications 1 à 5, **caractérisé en ce qu'**il comprend une cale (16) formant une butée limitant le pivotement du levier.

7. Civière de réception (2) d'un obus (100) comportant un dispositif de blocage (3) selon une des revendications 1 à 6.

8. Civière de réception (2) selon la revendication 7, **caractérisée en ce qu'**elle comporte au moins une paire de mâchoires (5)disposées de part et d'autre de la civière (2) et en regard l'une de l'autre.

9. Civière de réception (2) selon la revendication 7, **caractérisée en ce qu'**elle comporte au moins une mâchoire (5) disposée en regard d'un berceau fixe (102).

## Patentansprüche

1. Vorrichtung zum Verriegeln (3) einer Granate (100), vor allem in einer Trage (2), wobei die Vorrichtung mindestens eine Backe (5) aufweist, die zum Spannen der Granate (100) bestimmt ist und zwischen einer offenen Position und einer geschlossenen Position um eine Schwenkachse (6) schwenkt, die parallel zu einer Längsachse (101) der Granate (100) ist, wobei sich die Schwenkachse (6) der Backe (5) zwischen einem oberen Ende (5a) und einem unteren Ende (5b) der Backe (5) befindet, wobei das untere Ende (5b) der Backe (5) zur Aufnahme der Granate (100) bestimmt ist, um ihren Verschluss zu erlauben, wobei die Verriegelungsvorrichtung (3) einen Nocken (9) und einen schwenkenden Hebel (10) aufweist, wobei das untere Ende (5b) der Backe (5) eine Raste (7) aufweist, die bestimmt ist, mit einem Sporn (11) des Nockens (9) zu interferieren, um die Backe (5) in geschlossener Position zu halten, wobei der Nocken (9) mit dem schwenkenden Hebel (10) fest verbunden ist, wobei das Schwenken des Hebels (10) erlaubt, so den Sporn (11) von der drehenden Bahn der Raste (7) der Backe (5) freizugeben, was das Öffnen der Backe (5) gestattet, wobei die Vorrichtung **dadurch gekennzeichnet ist, dass** der Hebel (10) zur schwenkenden Betätigung durch den Schub eines äußeren Organs wie ein Granatentransportmittel (103) bestimmt ist, wobei die Verriegelungsvorrichtung (3) eine erste Feder (13) und eine zweite Feder (14) aufweist, die jeweils auf den Hebel (10) antagonistisch wirken, wobei die zweite Feder (14) steifer als die erste (13) ist, wobei die erste Feder (13) bewirkt, dass der Hebel (10) in hohe Position zurückgestellt wird, so dass der Sporn (11) vom Nocken (9) in Kontakt mit der Backe (5) geführt wird, wobei die zweite Feder (14) zur Betätigung durch den Schub des Organs (103) bestimmt ist und der Wirkung der ersten Feder (13) entgegenwirkt, was erlaubt, das Anheben des Hebels (10) und des Verriegelungssporns (11) beim Entfernen des Organs (103) zu verlangsamen.

2. Verriegelungsvorrichtung (3) nach Anspruch 1, **dadurch gekennzeichnet, dass** sie eine Schubstange (15) aufweist, die zur Übertragung der Schubbewegung des äußeren Organs (103) auf die zweite Feder (14) imstande ist.

3. Verriegelungsvorrichtung (3) nach Anspruch 2, **dadurch gekennzeichnet, dass** die Schubstange (15) einen Absatz (15a) aufweist, wobei die zweite Feder (14) eine Kompressionsfeder ist, die zwischen dem Absatz (15a) und dem Hebel (10) angeordnet ist.

4. Verriegelungsvorrichtung (3) nach einem der Ansprüche 1 bis 3, **dadurch gekennzeichnet, dass** die erste Feder (13) eine Zugfeder ist, die zwischen dem Hebel (10) und einem Gestell befestigt ist, das mit der Trage (2) fest verbunden ist.

5. Verriegelungsvorrichtung (3) nach einem der Ansprüche 1 bis 3, **dadurch gekennzeichnet, dass** die erste Feder (13) eine Kompressionsfeder ist, die zwischen dem Hebel (10) und einer Bodenplatte (18) befestigt ist, die mit der Trage (2) fest verbunden ist.

6. Verriegelungsvorrichtung (3) nach einem der Ansprüche 1 bis 5, **dadurch gekennzeichnet, dass** sie einen Keil (16) umfasst, der einen Anschlag bildet, der das Schwenken des Hebels begrenzt.

7. Trage (2) zur Aufnahme einer Granate (100), aufweisend eine Verriegelungsvorrichtung (3) nach einem der Ansprüche 1 bis 6.

8. Aufnahmetrage (2) nach Anspruch 7, **dadurch gekennzeichnet, dass** sie mindestens ein Paar Backen (5) aufweist, die beiderseits der Trage (2) und einander gegenüber angeordnet sind.

9. Aufnahmetrage (2) nach Anspruch 7, **dadurch gekennzeichnet, dass** sie mindestens eine Backe (5) aufweist, die gegenüber einer festen Wiege (102) angeordnet ist.

## Claims

1. A device (3) for locking a shell (100), in particular in a stretcher (2), the device comprising at least one jaw (5) intended to clamp the shell (100) and pivoting between an open position and a closed position around a pivot axis (6) parallel to a longitudinal axis (101) of the shell (100), the pivot axis (6) of the jaw (5) being located between an upper end (5a) and a lower end (5b) of the jaw (5), the lower end (5b) of the jaw (5) being intended to receive the shell (100) to allow it to close, the locking device (3) comprising a cam (9) and a pivoting lever (10), the lower end (5b) of the jaw (5) comprising a notch (7) intended to interfere with a catch (11) of the cam (9) for retaining the jaw (5) in the closed position, the cam (9) being secured to the pivoting lever (10), the pivoting of the lever (10) thus allowing the catch (11) to move clear from the rotating path of the notch (7) of the jaw (5), which allows the jaw (5) to open, the device being **characterised in that** the lever (10) is intended to be pivotally activated by pushing of an external member such as a shell transport means (103), the locking device (3) comprising a first spring (13) and a second spring (14) each acting on the lever (10) in opposite directions, the second spring (14) being stiffer than the first spring (13), the effect of the first spring (13) being to bias the lever (10) toward an upper position so as to bring the catch (11) of the cam (9) into contact with the jaw (5), the second spring (14) being intended to be activated by the pushing of the member (103) and countering the action of the first spring (13), thus making it possible to delay the lifting of the lever (10) and the locking catch (11) when the member (103) is removed.

2. The locking device (3) according to claim 1, **characterised in that** it comprises a push rod (15) able to transmit the pushing movement from the external member (103) onto the second spring (14).

3. The locking device (3) according to claim 2, **characterised in that** the push rod (15) comprises a shoulder (15a), the second spring (14) being a compression spring inserted between the shoulder (15a) and the lever (10) .

4. The locking device (3) according to one of claims 1 to 3, **characterised in that** the first spring (13) is a tension spring fixed between the lever (10) and a frame secured to the stretcher (2).

5. The locking device (3) according to one of claims 1 to 3, **characterised in that** the first spring (13) is a compression spring fixed between the lever (10) and a bottom plate (18) secured to the stretcher (2).

6. The locking device (3) according to one of claims 1 to 5, **characterised in that** it comprises a shim (16) forming a stop that limits pivoting of the lever.

7. A receiving stretcher (2) for receiving a shell (100) comprising a locking device (3) according to any one of claims 1 to 6.

8. The receiving stretcher (2) according to claim 7, **characterised in that** it comprises at least one pair of jaws (5) arranged on either side of the stretcher (2) and facing each other.

9. The receiving stretcher (2) according to claim 7, **characterised in that** it comprises at least one jaw (5) facing a fixed cradle (102).
